# EUROPÄISCHE PATENTANMELDUNG

(11) **EP 2 159 761 A1**
(43) Veröffentlichungstag der Anmeldung: **03.03.2010**
(21) Anmeldenummer: 09010148.6
(22) Anmeldetag: 06.08.2009
(51) Int. Cl.: G07F 7/06

(54) **Vorrichtung zum Sammeln von Rückgabegebinden**

(30) Priorität: 20.08.2008 DE 102008038525
(71) Anmelder: Wincor Nixdorf International GmbH, 33106 Paderborn (DE)
(72) Erfinder: Franke, Volker, 99310 Arnstadt (DE); Fischer, Axel, 98693 Ilmenau (DE); Sperlich, Silvio, 98693 Martinroda (DE)

(57) **Zusammenfassung**

Eine Vorrichtung zum Sammeln von Rückgabegebinden (5) weist einen Sammelbehälter (6) mit einem absenkbaren Sammelbehälterboden (7) auf, eine Zuführöffnung (2), durch die die Rückgabegebinde (5) dem Sammelbehälter (6) zuführbar sind, wobei der Sammelbehälterboden (7) derart in dem Sammelbehälter angeordnet ist, dass der Sammelbehälterboden (7) durch die von den Rückgabegebinden (5) und dem Sammelbehälterboden (5) verursachte Gewichtskraft relativ zur Zuführöffnung (2) absenkbar. Desweiteren wird ein Verfahren zum Sammeln von Rückgabegebinden beschrieben. Ein Signal wird ausgelöst, wenn viele Rückgabegebinde auf dem Sammelband sich befinden. Dieses Signal bewirkt die Inbetriebnahme eines Entrieglers. Der Entriegler wiest einen Stößel auf. Die Drehbewegung einer Wickelwelle bewirkt, dass das Sammelband von der Wickelwelle abgespüllt wird.

## Beschreibung

Die Erfindung betrifft eine Vorrichtung zum Sammeln von Rückgabegebinden gemäß dem Oberbegriff des Anspruchs 1.

Bei der Rücknahme von Ein- und Mehrweggebinden durch Automaten müssen die erkannten Gebinde entweder abtransportiert oder im Automaten gesammelt werden. Bei der Sammlung von bruchempfindlichen Leergutgebinden in normalen Sammelbehältern kommt es gewöhnlicherweise zur Beschädigung oder zum Bruch dieser Gebinde, beispielsweise Glasflaschen.

Aus dem Stand der Technik sind zur Lösung dieses Problems mehrere Ansätze bekannt. So ist aus der DE 1474874 eine Vorrichtung zum Sammeln von Rückgabegebinden bekannt, welche mit rein mechanischen Mitteln eine Glasflasche von einem in dem Gerät enthaltenen Prüfboden zu einem Sammelbehälter weiterleitet. Dabei fällt die Flasche von einem Prüfboden in eine Transportwanne, welche sich in Folge des Flaschengewichtes entgegen einem mit der Transportwanne verbundenen Gegengewicht unter Schwenkung einer Parallelführung in den Sammelbehälter absenkt. Nachteilig bei diesem Gerät ist, dass der Flaschentransport in einem solchen Gerät nur sehr langsam erfolgt, da jede einzelne Flasche zeitaufwendig von einer Geräteeingabe über die Transportwanne auf den Boden des Sammelbehälters abgesenkt werden muss.

Aus der US 1574575 ist eine Vorrichtung bekannt, welche eine in einen Sammelbehälter absenkbaren Boden aufweist, der sich bei jeder eingegebene Leerflasche jeweils um einen vorgegebenen bestimmten Betrag absenkt. Je nach Verteilung der Flaschen auf dem absenkbaren Boden kann so der Abstand zwischen der Flascheneingabe und dem Sammelbehälterboden so groß werden, dass die Flasche beim Auftreffen auf den abgesenkten Boden bricht.

Aus der DE 3320266 A1 ist eine Vorrichtung zum Sammeln leerer Getränkeflaschen bekannt, bei der der Wagen als Sammelbehälter ausgebildet ist und einen Boden aufweist, der durch einen motorbetriebenen Kettenantrieb in der Höhe verschiebbar ist, wobei diese Verschiebung über Lichtschranken und Schaltflügel gesteuert in Abhängigkeit der laufend in den Behälter gelangenden Flachen erfolgt.

Aufgabe der vorliegende Erfindung ist es, eine Vorrichtung zum Sammeln von Rückgabegebinden zu schaffen, wobei die Vorrichtung kostengünstig herstellbar ist und bei dem die Rückgabegebinde auf einfache und betriebssichere Weise in den Sammelbehälter befördert werden.

Diese Aufgabe wird gelöst durch eine Vorrichtung zum Sammeln von Rückgabegebinden gemäß den Merkmalen des Anspruchs 1.

Weitere vorteilhafte Ausbildungen sind in den Unteransprüchen gekennzeichnet.

Mit der erfindungsgemäßen Vorrichtung, bei der der Sammelbehälterboden derart in den Sammelbehälter geordnet ist, dass der Sammelbehälterboden durch die von den Rückgabegebinden und dem Sammelbehälterboden verursachte Gewichtskraft relativ zur Zuführöffnung absenkbar ist, ist zum einen eine einfache und betriebssichere Beförderung der Rückgabegebinde in den Sammelbehälter ermöglicht. Vorteilhaft ist außerdem, dass der Sammelbehälterboden nur durch das Eigengewicht der Rückgabegebinde und des Sammelbehälterbodens selbst absenkbar ist. Dadurch kann die Vorrichtung motorfrei ausgelegt werden, was sich kostensenkend auf die Herstellung der Vorrichtung auswirkt.

Gemäß einer besonderen Ausführungsform ist der Sammelbehälterboden als elastisches Sammelband ausgebildet, wodurch der Aufprall der Rückgabegebinde auf den Sammelbehälterboden gedämpft wird.

Nach einer besonders bevorzugten Ausführungsform weist der Sammelbehälter eine Wickelwelle und einen eine Drehbewegung der Wickelwelle blockierenden Riegel auf, wobei ein Ende des Sammelbandes an der Wickelwelle befestigt und aufrollbar ist. Dadurch ist eine einfache Absenkung des Sammelbandes ermöglicht, in dem das Sammelband schrittweise von der Wickelwelle abgewickelt wird.

Die Wickelwelle ist bevorzugt mit Blockierelementen ausgerüstet, in die der Riegel eingreift. Der Riegel ist bevorzugt mit einem unteren und einem oberen Sperrstück ausgebildet, wobei das untere Sperrstück in einer Ausgangsstellung des Riegels die Blockierelemente darin hindert, den Riegel zu passieren und das oberen Sperrstück in einer ausgelenkten Stellung des Riegels die Blockierelemente am Passieren des Riegels hindert. Je nach Anordnung der Blockierelemente auf der Wickelwelle ist so eine in äquidistanten Schritten ablaufende Absenkung des Sammelbehälterbodens ermöglicht.

Die Entriegelung des Riegels erfolgt bevorzugt durch eine Entriegler mit einem Stößel, was den Vorteil hat, dass der Entriegler nicht an dem mobilen Sammelbehälter angebracht sein muss, sondern nur bei Bedarf mit dem Riegel in Kontakt tritt.

Zur Wiederaufwicklung des Sammelbandes ist die Wickelwelle bevorzugt mit einer Handkurbel ausgebildet, mit der das Sammelband auf der Wickewelle manuell nach vollständiger Leerung des Sammelbehälters wieder aufrollbar ist.

In eine alternativen Ausbildungsvariante ist der Sammelbehälterboden mit Halterungen am Sammelbehälter befestigt, wobei die Halterung bevorzugt als Zugfedern ausgebildet sind. Dadurch ist eine sehr einfach gebaute, die Gewichtskraft der Rückgabegebinde ausnutzende Vorrichtung zum Sammeln von Rückgabegebinden ermöglicht.

Nach dem erfindungsgemäßen Verfahren weist dieses den Verfahrensschritt auf, dass die Höheneinstellung des Sammelbehälterbodens durch die von den Rückgabegebinden und dem Sammelbehälterboden verursacht Gewichtskraft auf mindesten eine Halterung des Sammelbehälterbodens am Sammelbehälter bewirkt wird. Dadurch wird eine externe, beispielsweise eine durch einen Elektromotor bewirkte, Kraftausübung auf den Sammelbodenbehälter vermieden, was die laufenden Betriebskosten der Vorrichtung bei Anwendung dieses Verfahrens senkt.

Anhand der beiliegenden Zeichnungen wird die Erfindung noch näher erläutert.

Es zeigen:
- Figur 1: eine schematische Seitenschnittansicht einer Ausführungsform der Vorrichtung zum Sammeln von Rückgabegebinden,

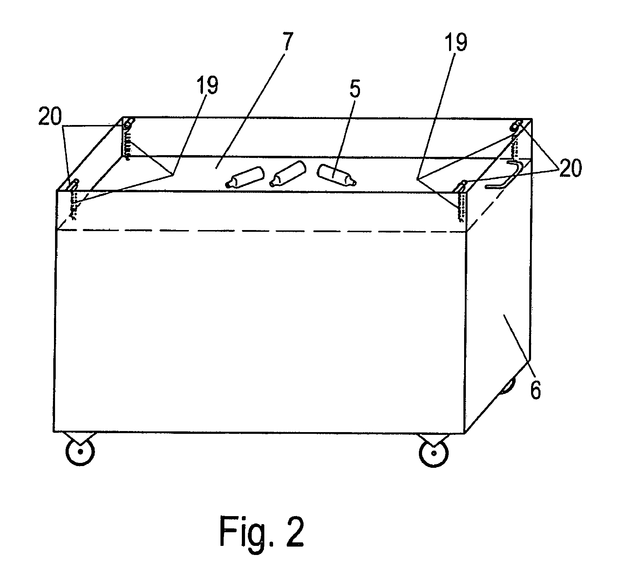

- Figur 2: eine schematische perspektivische Ansicht einer alternativen Ausführungsform der erfindungsgemäßen Vorrichtung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Vorrichtung. Diese Begriffe sind nicht einschränkend zu verstehen, das heißt in verschiedenen Arbeitsstellungen oder durch spiegelsymmetrische Auslegung oder dergleichen können sich diese Bezüge ändern.

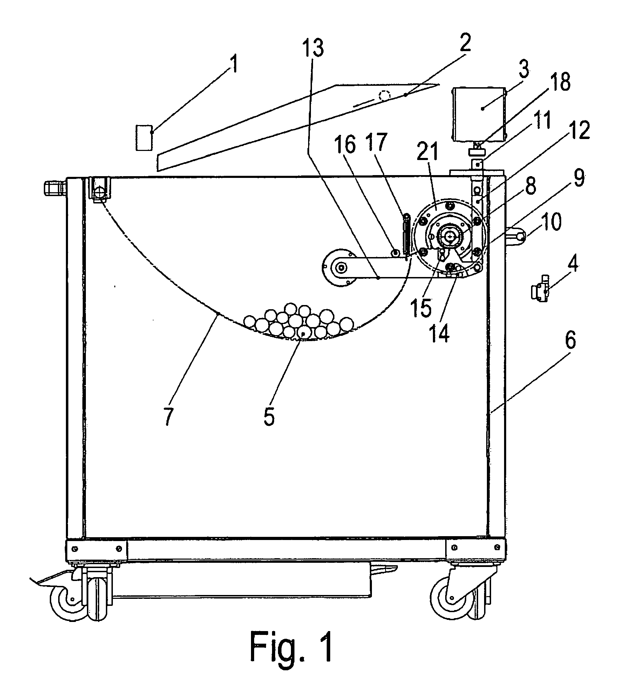

Figur 1 zeigt eine erste Ausführungsform der erfindungsgemäßen Vorrichtung, die im Wesentlichen aus zwei Hauptbestandteilen besteht. Erster Hauptbestandteil ist ein rollbarer Sammelbehälter 6 für zerbrechliche Pfand- beziehungsweise Rückgabegebinde 5, welcher ein absenkbares Sammelband 7, eine Wickelwelle 8, einen Riegel 13, Blockierelementen 9 und eine Handkurbel 10 aufweist.

Das absenkbare Sammelband 7 wird vor dem Einschub des rollbaren Sammelbehälters 6 mit der an der Wickelwelle 8 befestigten Handkurbel 10 manuell auf der Wickelwelle 8 aufgespult. Dadurch wird die Fallhöhe der Rückgabegebinde 5 auf ein Minimum reduziert.

Die Vorrichtung weist des Weiteren eine hier nicht gezeigte und aus dem Stand der Technik bekannte Erkennungseinrichtung zur Erkennung der Gebinde 5 auf, welche von der Sammelvorrichtung aufgenommen werden. Die von dieser Erkennungseinrichtung erkannten Gebinde 5 werden über einen Zuführkanal 2 zum Sammelbehälter 6 geleitet. Am Ende des Zuführkanals 2 fallen die Rückgabegebinde 5 aus geringer Höhe auf das absenkbare Sammelband 7. Die Erkennungseinrichtung kann auch in dem Zuführkanal 2 angeordnet sein.

Befinden sich entsprechend viele Rückgabegebinde 5 auf dem Sammelband 7, wird von einer Füllstandsüberwachungseinrichtung 1, die bevorzugt als Ultraschallfüllstandssensor ausgebildet ist, ein Signal ausgelöst. Dieses Signal wird von einer (nicht gezeigten) Steuereinrichtung der Sammelvorrichtung verarbeitet und bewirkt die Inbetriebnahme eines Entrieglers 3. Dieser Entriegler 3 kann elektrisch, pneumatisch, magnetisch oder auch hydraulisch betrieben werden. Der Entriegler 3 weist bevorzugt einen Stößel 18 auf, welche einen linearen Hub vollführt und dabei auf einem Betätiger 11 trifft, welcher durch den Entriegler 3 nach unten gedrückt wird und dabei den Riegel 13 nach unten bewegt. Der Riegel 13 ist dabei an einen von dem Betätiger 11 abgewandten Ende drehbar an einer Seitenwand des Sammelbehälters 6 gelagert und kann so dem linearen Hub des Entrieglers 3 folgen. Bevorzugt befindet sich zwischen den Betätiger 11 und dem Riegel 13 ein Koppelblech 12, welches mit dem Betätiger 11 an einem Ende und dem Riegel 13 an dem anderen Ende verbunden ist.

Der Riegel 13 ist bevorzugt mit einem unteren Sperrstück 14 und einem oberen Sperrstück 15 ausgebildet. In der Ausgangsstelle des Riegels 13 hindert das untere Sperrstück 14 die bevorzugt auf einer Scheibe 21 fest mit der Wickelwelle 8 verbundenen Blockierelemente 9, den Riegel 13 zu passieren. Wird der Riegel 13 durch eine auf den Betätiger 11 wirkende Kraft nach unten gedrückt, so wird das noch eben gesperrte Blockierelement 9 freigegeben. An der Wickelwelle 8 liegt ein durch die Gewichtskraft des Rückgabegebindes 5 und des Sammelbehälterbodens 7 verursachtes Drehmoment an. In einer besonderen Ausführungsform ist an dem Sammelbehälterbodens 7 ein (nicht gezeigtes) zusätzliches Gewicht angebracht, bevorzugt an der Unterseite des Sammelbehälterbodens 7. Durch das Freigeben des Blockierelements 9 und das wirkende Moment an der Wickelwelle 8 dreht die Wickelwelle 13 sich entgegen dem Uhrzeigersinn soweit, bis das nächste Blockierelement 9 an das obere Sperrstück 15 anschlägt. Bei entsprechender Aufwicklung des Sammelbandes 7 auf der Wickelwelle ist auch eine Drehung im Uhrzeigersinn zur Absenkung des Sammelbandes 7 denkbar. Dieses versperrt den Blockierelementen 9 bei gedrücktem Betätiger 11 den Weg.

Wird die Kraft vom Betätiger 11 genommen, so zieht eine Rückzugsfeder 17, welche fest an einer Seitenwand des Sammelbehälters 6 zugeordnet ist, den Riegel 13 wieder in seiner Ausgangsstellung, welche durch einen ebenfalls an einer Seitenwand des Sammelbehälters 6 angebrachten Anschlag 16 festgelegt ist. Dabei gibt das obere Sperrstück 15 das eben noch gehaltene Blockierelement 9 frei und die Wickelwelle 8 dreht sich solange weiter, bis das Blockierelement 9 das untere Sperrstück 14 erreicht. Während der Drehbewegung der Wickelwelle 8 wird das absenkbare Sammelband 7 von der Wickelwelle 8 abgespult und das Sammelband 7 mit den darauf liegenden Rückgabegebinden 5 senkt sich in den Sammelbehälter 6.

Dieser Vorgang kann beliebig oft wiederholt werden, um das Sammelband 7 soweit abzusenken, bis der Füllstandsensor 1 kein Signal mehr abgibt. Detektiert der Sensor 1 nach einer festgelegten Anzahl von Betätigungen noch immer einen Füllstand des Sammelbandes, der eine weitere Absenkung des Sammelbandes 7 nach sich ziehen würde, so wird dies von der Steuereinheit der Sammelvorrichtung ausgewertet. Mittels Leuchtanzeige und Klartex in einem nicht gezeigten Bediendisplay wird angezeigt, dass eine manuelle Entleerung des Sammelbehälters erforderlich ist.

Gemäß einer alternativen Ausführungsform befindet sich in einem Sammelbehälter 6 ein höhenverstellbarer Sammelbehälterboden 7, welcher über Zugfedern 19 an dem Sammelbehälter 6 befestigt ist. Die Zugfedern 19 sind bevorzugt an Stiften 20 gehaltert, welche unmittelbar unter der Oberkante der Seitenwände des Sammelbehälters 6 befestigt sind. Der Sammelbehälterboden 7 ist vorzugsweise aus Kunststoff gefertigt und seine Oberfläche ist bevorzugt mit einem hinreichend dämpfenden und leicht zu reinigenden Material beschichtet. Wird der Sammelbehälter 6 mit Rückgabegebinden 5 gefüllt, so bewirkt die Gewichtskraft der Gebinde 5 und des Sammelbehälterbodens 7 auf die Federn 19, so dass bei zunehmender Füllung des Sammelbehälters 6 sich der Sammelbehälterboden 7 tiefer in den Sammelbehälter 6 absenkt.

Die Erfindung ist nicht auf die dargestellten Ausführungsbeispiele beschränkt. Wesentlich ist, dass zur Absenkung des Sammelbehälterbodens 7 in dem Sammelbehälter 6 das Eigengewicht der Rückgabegebinden 5 und des Sammelbehälterbodens 7 ausgenutzt wird.

### Bezugszeichen

- 1: Füllstandsüberwachungseinrichtung
- 2: Zuführkanal
- 3: Entriegler
- 4: Anwesenheitssensor
- 5: Rückgabegebinde
- 6: Sammelbehälter
- 7: Sammelbehälterboden
- 8: Wickelwelle
- 9: Blockierelement
- 10: Kurbel
- 11: Betätiger
- 12: Koppelblech
- 13: Riegel
- 14: Unteres Sperrstück
- 15: Oberes Sperrstück
- 16: Anschlag
- 17: Rückzugfeder
- 18: Stößel
- 19: Halterung
- 20: Stift
- 21: Scheibe

## Patentansprüche

1. Vorrichtung zum Sammeln von Rückgabegebinden (5), aufweisend einen Sammelbehälter (6) mit einem absenkbaren Sammelbehälterboden (7), eine Zuführöffnung (2), durch die die Rückgabegebinde (5) dem Sammelbehälter (6) zuführbar sind, **dadurch gekennzeichnet dass** der Sammelbehälterboden (7) derart in dem Sammelbehälter angeordnet ist, dass der Sammelbehälterboden (7) durch die von den Rückgabegebinden (5) und dem Sammelbehälterboden (5) verursachte Gewichtskraft relativ zur Zuführöffnung (2) absenkbar ist.

2. Vorrichtung nach Anspruch 1, **dadurch gekennzeichnet, dass** der Sammelbehälterboden (7) als elastisches Sammelband (7) ausgebildet ist.

3. Vorrichtung nach Anspruch 2, **dadurch gekennzeichnet, dass** der Sammelbehälter (6) eine mehrere Sperrstellungen aufweisende Verriegelung aufweist.

4. Vorrichtung nach Anspruch 2, **dadurch gekennzeichnet, dass** die Verriegelung eine Wickelwelle (8) und einen eine Drehbewegung der Wickelwelle (8) blockierenden Riegel (13) aufweist, wobei ein Ende des Sammelbandes (7) an der Wickelwelle (8) befestigt und aufrollbar ist.

5. Vorrichtung nach Anspruch 4, **dadurch gekennzeichnet, dass** die Wickelwelle (8) Blockierelemente (9) aufweist, in die der Riegel (13) eingreift.

6. Vorrichtung nach Anspruch 4 oder 5, **dadurch gekennzeichnet, dass** der Riegel (13) mit einem unteren Sperrstück (14) und einem oberen Sperrstück (15) ausgebildet ist, wobei das untere Sperrstück (14) derart ausgelegt ist, dass es in einer Ausgangsstellung des Riegels (13) die Blockierelemente (9) daran hindert, den Riegel zu passieren und das obere Sperrstück (15) derart ausgelegt ist, dass es in einer ausgelenkten Stellung des Riegels (13) die Blockierelemente (9) daran hindert, den Riegel (13) zu passieren.

7. Vorrichtung nach Anspruch 4, 5 oder 6, **dadurch gekennzeichnet, dass** der Riegel (13) durch einen Entriegler (3) entriegelbar ist.

8. Vorrichtung nach Anspruch 7, **dadurch gekennzeichnet, dass** der Entriegler (3) einen Stößel (18) aufweist, der geeignet ist, den Riegel (13) aus der Ausgangsstellung auszulenken.

9. Vorrichtung nach Anspruch 8, **dadurch gekennzeichnet, dass** an dem Riegel (13) ein Rückzugselement befestigt ist, dass geeignet ist, den Riegel (13) aus der ausgelenkten Stellung in die Ausgangsstellung zurück zu stellen.

10. Vorrichtung nach Anspruch 9, **dadurch gekennzeichnet, dass** an dem Sammelbehälter (6) ein Anschlag (16) befestigt ist, an dem der Riegel (13) in der Ausgangsstellung anliegt.

11. Vorrichtung nach Anspruch 8, 9 oder 10, **dadurch gekennzeichnet, dass** an dem Riegel (13) ein Koppelstück (12) angeordnet ist, das von dem Stößel (18) betätigbar ist.

12. Vorrichtung nach Anspruch 11, **dadurch gekennzeichnet, dass** das Koppelstück (12) an seinem dem Stößel (18) zugewandten Ende mit einem Betätiger (11) ausgebildet ist.

13. Vorrichtung nach einem der Ansprüche 8 bis 12, **dadurch gekennzeichnet, dass** der Entriegler (3) als elektrischer, hydraulischer, pneumatischer oder magnetischer Entriegler ausgebildet ist.

14. Vorrichtung nach einem der Ansprüche 4 bis 13, **dadurch gekennzeichnet, dass** die Wickelwelle (8) mit einer Kurbel (10) ausgebildet ist, mit der das Sammelband (7) auf der Wickelwelle (8) aufspulbar ist.

15. Vorrichtung nach Anspruch 14, **dadurch gekennzeichnet, dass** die Kurbel (10) als Handkurbel ausgebildet ist, mit der das Sammelband (7) auf der Wickelwelle (8) manuell aufspulbar ist.
